# EUROPEAN PATENT SPECIFICATION

(11) **EP 0 860 468 B1**
(45) Date of publication and mention of the grant of the patent: **08.05.2002**
(21) Application number: 98102779.0
(22) Date of filing: 18.02.1998
(51) Int. Cl.: C08K 5/20, C08K 5/54, C08L 21/00

(54) **Rubber compositions containing a benzamide compound**
Kautschukzusammensetzungen welche eine Benzoamideverbindung enthalten
Compositions de caoutchouc contenant un composé benzoamide

(30) Priority: 25.02.1997 US 805785
(43) Date of publication of application: 26.08.1998
(73) Proprietor: THE GOODYEAR TIRE & RUBBER COMPANY, Akron, Ohio 44316-0001 (US)
(72) Inventor: Wideman, Lawson Gibson, Tallmadge, Ohio 44278 (US); Sandstrom, Paul Harry, Tallmadge, Ohio 44278 (US)
(74) Representative: Leitz, Paul

(56) References cited:
- EP-A- 0 732 362
- EP-A- 0 754 571
- CHEMICAL ABSTRACTS, vol. 118, no. 8, 22 February 1993 Columbus, Ohio, US; abstract no. 61324, XP002067039 & JP 00 429 551 A (SUMITOMO) 4 September 1992

## Description

### Field of the Invention

The present invention relates to a rubber composition containing a mixture of at least one isolated and dried sulfur-vulcanizable elastomer and a benzamide compound.

### Background of the Invention

Processing aids are commonly used in both natural and synthetic rubber compositions. Such processing aids are used during the mixing permeating incorporation of fillers and other ingredients rapidly with lower power consumption. In instances where the filler is silica, well-known sulfur containing organosilicon compounds are used to further assist in compatibilizing the silica in the rubber composition.

### Summary of the Invention

The present invention relates to the use of a benzamide compound in a mixture with an isolated and dried sulfur vulcanizable elastomer.

### Detailed Description of the Invention

There is disclosed a method for processing a rubber composition which comprises mixing
(i) 100 parts by weight of at least one isolated and dried sulfur vulcanizable elastomer selected from conjugated diene homopolymers and copolymers and from copolymers of at least one conjugated diene and aromatic vinyl compound; and
(ii) .05 to 10 phr of a benzamide of the formula 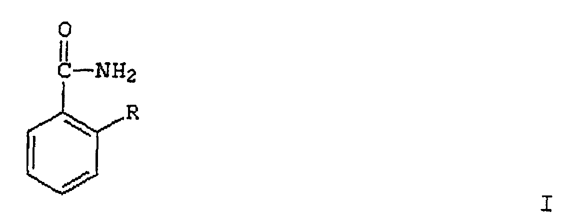 where R is hydrogen or a hydroxyl group.

There is also disclosed a rubber composition comprising an intimate mixture of an isolated and dried elastomer containing olefinic unsaturation and a benzamide of the formula 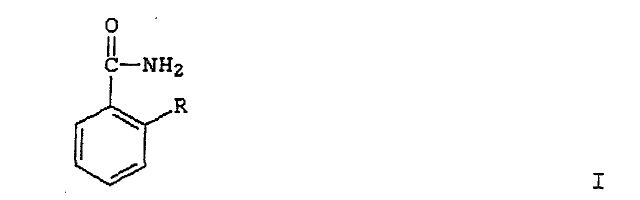 where R is hydrogen or a hydroxyl group.

The present invention may be used to process isolated and dried sulfur vulcanizable rubbers or elastomers containing olefinic unsaturation. The phrase "isolated and dried" is intended to exclude those polymers, such as "living polymers," which are in solution or suspension in a solvent or latex form in an aqueous solvent. Isolated and dried is intended to include those elastomers which are separated from their polymerization medium, coagulated and thereafter dried to remove residual amounts of solvent. The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. The preferred rubber or elastomers are polybutadiene and SBR.

In one aspect the rubber is preferably a mixture of two isolated and dried diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

The relatively high styrene content of 30 to 45 for the E-SBR can be considered beneficial for a purpose of enhancing traction, or skid resistance, of the tire tread. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile terpolymer rubbers containing 2 to 40 weight percent bound acrylonitrile in the terpolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent. Once again, such rubber must not be the "living polymer" when mixed with the benzamide. Therefore, the rubber is isolated and dried prior to being mixed with the benzamide.

A purpose of using S-SBR is for improved tire rolling resistance as a result of lower hysteresis when it is used in a tire tread composition.

The 3,4-polyisoprene rubber (3,4-PI) is considered beneficial for a purpose of enhancing the tire's traction when it is used in a tire tread composition. The 3,4-PI and use thereof is more fully described in US-A- 5,087,668. The Tg refers to the glass transition temperature which can conveniently be determined by a differential scanning calorimeter at a heating rate of 10°C per minute.

The cis 1,4-polybutadiene rubber (BR) is considered to be beneficial for a purpose of enhancing the tire tread's wear, or treadwear. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The benzamide compounds used in the present invention are of the formula 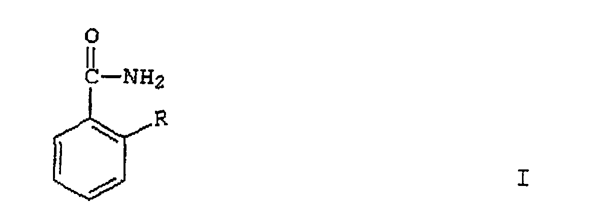 where R is a hydroxyl group. The benzamide of the formula 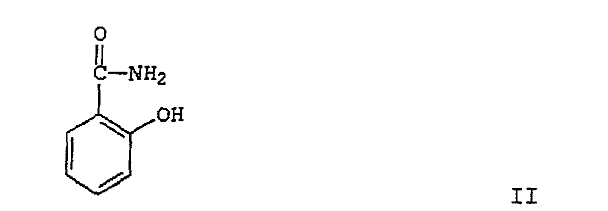 is more commonly known as salicylamide. Salicylamide is commercially available form Aldrich Chemical Company of St Louis, Missouri.

The benzamide of formula I used in the present invention may be added to the rubber by any conventional technique such as on a mill or in a Banbury. The amount of benzamide may vary widely depending on the type of rubber and other compounds present in the vulcanizable composition. Generally, the amount of benzamide is used in a range of from .05 to 10.0 phr with a range of .1 to 5.0 phr being preferred. The benzamide may be added to the nonproductive or productive mix stage but is preferably added in the nonproductive stage.

For ease in handling, the benzamide may be used per se or may be deposited on suitable carriers. Examples of carriers which may be used in the present invention include silica, carbon black, alumina, kieselguhr, silica gel and calcium silicate.

The rubber composition preferably contains a sufficient amount of silica, and carbon black, if used, to contribute a reasonably high modulus and high resistance to tear. The silica filler may be added in amounts ranging from 10 to 250 phr. Preferably, the silica is present in an amount ranging from 15 to 80 phr. If carbon black is also present, the amount of carbon black, if used, may vary. Generally speaking, the amount of carbon black will vary from 0 to 80 phr. Preferably, the amount of carbon black will range from 0 to 40 phr. It is to be appreciated that the benzamide of formula I may be used in conjunction with a carbon black, namely pre-mixed with a carbon black prior to addition to the rubber composition, and such carbon black is to be included in the aforesaid amount of carbon black for the rubber composition formulation.

Where the rubber composition contains both silica and carbon black, the weight ratio of silica to carbon black may vary. For example, the weight ratio may be as low as 1:5 to a silica to carbon black weight ratio of 30:1. Preferably, the weight ratio of silica to carbon black ranges from 1:3 to 5:1. The combined weight of the silica and carbon black, as herein referenced, may be as low as 30 phr, but is preferably from 45 to 90 phr.

The commonly employed particulate precipitated silica used in rubber compounding applications can be used as the silica in this invention. The siliceous pigments preferably employed in this invention are such precipitated silicas include, for example, those obtained by the acidification of a soluble silicate, e.g., sodium silicate.

Such silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, page 304 (1930).

The silica may also be typically characterized by having a dibutylphthalate (DBP) absorption value in a range of 100 to 400, and more usually 150 to 300.

The silica might be expected to have an average ultimate particle size, for example, in the range of 0.01 to 0.05 micron as determined by the electron microscope, although the silica particles may be even smaller, or possibly larger, in size.

Various commercially available silicas may be considered for use in this invention such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3, etc.

Whereas the benzamides of formula I function as a silica coupling agent, the processing of the sulfur vulcanizable rubber may be conducted in the presence of a sulfur containing organosilicon compound. Examples of suitable sulfur containing organosilicon compounds are of the formula:

Z-Alk-Sₙ-Alk-Z (IV)

in which Z is selected from the group consisting of 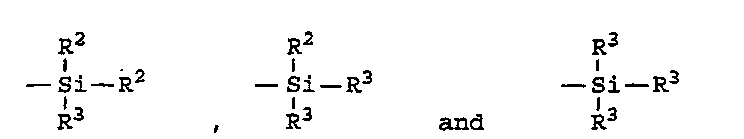 where R² is an alkyl group of 1 to 4 carbon atoms, cyclohexyl or phenyl;
R³ is alkoxy of 1 to 8 carbon atoms, or cycloalkoxy of 5 to 8 carbon atoms;

Alk is a divalent hydrocarbon of 1 to 18 carbon atoms and n is an integer of 2 to 8.

Specific examples of sulfur containing organosilicon compounds which may be used in accordance with the present invention include: 3,3'-bis(trimethoxysilylpropyl) disulfide, 3,3'-bis(triethoxysilylpropyl) tetrasulfide, 3,3'-bis(triethoxysilylpropyl) octasulfide, 3,3'-bis(trimethoxysilylpropyl) tetrasulfide, 2,2'-bis(triethoxysilylethyl) tetrasulfide, 3,3'-bis(trimethoxysilylpropyl) trisulfide, 3,3'-bis(triethoxysilylpropyl) trisulfide, 3,3'-bis(tributoxysilylpropyl) disulfide, 3,3'-bis(trimethoxysilylpropyl) hexasulfide, 3,3'-bis(trimethoxysilylpropyl) octasulfide, 3,3'-bis(trioctoxysilylpropyl) tetrasulfide, 3,3'-bis(trihexoxysilylpropyl) disulfide, 3,3'-bis(tri-2-ethylhexoxysilylpropyl) trisulfide, 3,3'-bis(triisooctoxysilylpropyl) tetrasulfide, 3,3'-bis(tri-t-butoxysilylpropyl) disulfide, 2,2'-bis(methoxy diethoxy silyl ethyl) tetrasulfide, 2,2'-bis(tripropoxysilylethyl) pentasulfide, 3,3'-bis(tricyclohexoxysilylpropyl) tetrasulfide, 3,3'-bis(tricyclopentoxysilylpropyl) trisulfide, 2,2'-bis (tri-2-methylcyclohexoxysilylethyl) tetrasulfide, bis(trimethoxysilylmethyl) tetrasulfide, 3-methoxy ethoxy propoxysilyl 3'-diethoxybutoxysilylpropyltetrasulfide, 2,2'-bis(dimethyl methoxysilylethyl) disulfide, 2,2'-bis(dimethyl sec.butoxysilylethyl) trisulfide, 3,3'-bis(methyl butylethoxysilylpropyl) tetrasulfide, 3,3'-bis(di t-butylmethoxysilylpropyl) tetrasulfide, 2,2'-bis(phenyl methyl methoxysilylethyl) trisulfide, 3,3'-bis(diphenyl isopropoxysilylpropyl) tetrasulfide, 3,3'-bis(diphenyl cyclohexoxysilylpropyl) disulfide, 3,3'-bis(dimethyl ethylmercaptosilylpropyl) tetrasulfide, 2,2'-bis(methyl dimethoxysilylethyl) trisulfide, 2,2'-bis(methyl ethoxypropoxysilylethyl) tetrasulfide, 3,3'-bis(diethyl methoxysilylpropyl) tetrasulfide, 3,3'-bis(ethyl di-sec. butoxysilylpropyl) disulfide, 3,3'-bis(propyl diethoxysilylpropyl) disulfide, 3,3'-bis(butyl dimethoxysilylpropyl) trisulfide, 3,3'-bis(phenyl dimethoxysilylpropyl) tetrasulfide, 3-phenyl ethoxybutoxysilyl 3'-trimethoxysilylpropyl tetrasulfide, 4,4'-bis(trimethoxysilylbutyl) tetrasulfide, 6,6'-bis(triethoxysilylhexyl) tetrasulfide, 12,12'-bis(triisopropoxysilyl dodecyl) disulfide, 18,18'-bis(trimethoxysilyloctadecyl) tetrasulfide, 18,18'-bis(tripropoxysilyloctadecenyl) tetrasulfide, 4,4'-bis(trimethoxysilyl-buten-2-yl) tetrasulfide, 4,4'-bis(trimethoxysilylcyclohexylene) tetrasulfide, 5,5'-bis(dimethoxymethylsilylpentyl) trisulfide, 3,3'-bis(trimethoxysilyl-2-methylpropyl) tetrasulfide, 3,3'-bis(dimethoxyphenylsilyl-2-methylpropyl) disulfide.

The preferred sulfur containing organosilicon compounds are the 3,3'-bis(trimethoxy or triethoxy silylpropyl) sulfides. The most preferred compound is 3,3'-bis(triethoxysilylpropyl) tetrasulfide. Therefore as to formula IV, preferably Z is 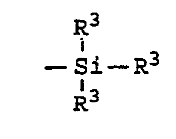 where R³ is an alkoxy of 2 to 4 carbon atoms, with 2 carbon atoms being particularly preferred; Alk is a divalent hydrocarbon of 2 to 4 carbon atoms with 3 carbon atoms being particularly preferred; and n is an integer of from 3 to 5 with 4 being particularly preferred.

The amount of the sulfur containing organosilicon compound of formula IV in a rubber composition will vary depending on the level of silica that is used. Generally speaking, the amount of the compound of formula IV, if used, will range from .01 to 1.0 parts by weight per part by weight of the silica. Preferably, the amount will range from .05 to 0.4 parts by weight per part by weight of the silica.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur vulcanized material (rubbers), the additives mentioned above are selected and commonly used in conventional amounts. Typical amounts of reinforcing type carbon blacks(s), for this invention, if used, are herein set forth. Representative examples of sulfur donors include elemental sulfur (free sulfur), an amine disulfide, polymeric polysulfide and sulfur olefin adducts. Preferably, the sulfur vulcanizing agent is elemental sulfur. The sulfur vulcanizing agent may be used in an amount ranging from 0.5 to 8 phr, with a range of from 1.5 to 6 phr being preferred. Typical amounts of tackifier resins, if used, comprise 0.5 to 10 phr, usually 1 to 5 phr. Typical amounts of processing aids comprise 1 to 50 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

In one aspect of the present invention, the sulfur vulcanizable rubber composition is then sulfurcured or vulcanized.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, preferably 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The rubber compositions of the present invention may contain a methylene donor and a methylene acceptor. The term "methylene donor" is intended to mean a compound capable of reacting with a methylene acceptor (such as resorcinol or its equivalent containing a present hydroxyl group) and generate the resin in-situ. Examples of methylene donors which are suitable for use in the present invention include hexamethylenetetramine, hexaethoxymethylmelamine, hexamethoxymethylmelamine, lauryloxymethylpyridinium chloride, ethoxymethylpyridinium chloride, trioxan hexamethoxymethylmelamine, the hydroxy groups of which may be esterified or partly esterified, and polymers of formaldehyde such as paraformaldehyde. In addition, the methylene donors may be N-substituted oxymethylmelamines, of the general formula: 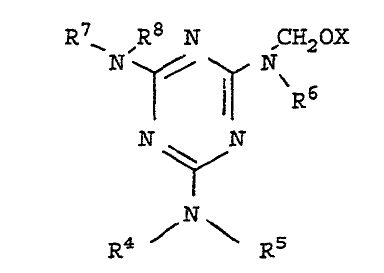 wherein X is an alkyl having from 1 to 8 carbon atoms, R⁴, R⁵, R⁶, R⁷ and R⁸ are individually selected from the group consisting of hydrogen, an alkyl having from 1 to 8 carbon atoms and the group -CH₂OX. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine and N,N'N"-tributyl-N,N',N"-trimethylol-melamine. The N-methylol derivatives of melamine are prepared by known methods.

The amount of methylene donor and methylene acceptor that is present in the rubber stock may vary. Typically, the amount of methylene donor and methylene acceptor that each is present will range from 0.1 phr to 10.0 phr. Preferably, the amount of methylene donor and methylene acceptor that each is present ranges from 2.0 phr to 5.0 phr.

The weight ratio of methylene donor to the methylene acceptor may vary. Generally speaking, the weight ratio will range from 1:10 to 10:1. Preferably, the weight ratio ranges from 1:3 to 3:1.

The mixing of the rubber composition can be accomplished by methods known to those having skill in the rubber mixing art. For example the ingredients are typically mixed in at least two stages, namely at least one non-productive stage followed by a productive mix stage. The final curatives including sulfur vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber, silica, benzamide of formula I and carbon black, if used, are mixed in one or more non-productive mix stages. The terms "non-productive" and "productive" mix stages are well known to those having skill in the rubber mixing art. The sulfur vulcanizable rubber composition containing the benzamide of formula I, vulcanizable rubber and generally at least part of the silica, if used, should, as well as the sulfur-containing organosilicon compound, if used, be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

Vulcanization of the rubber composition of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air or in a salt bath.

Upon vulcanization of the sulfur vulcanized composition, the rubber composition of this invention can be used for various purposes. For example, the sulfur vulcanized rubber composition may be in the form of a tire, belt or hose. In case of a tire, it can be used for various tire components. Such tires can be built, shaped, molded and cured by various methods which are known and will be readily apparent to those having skill in such art. Preferably, the rubber composition is used in the tread of a tire. As can be appreciated, the tire may be a passenger tire, aircraft tire, truck tire and the like. Preferably, the tire is a passenger tire. The tire may also be a radial or bias, with a radial tire being preferred.

The invention may be better understood by reference to the following examples in which the parts and percentages are by weight unless otherwise indicated.

The following examples are presented in order to illustrate but not limit the present invention.

Cure properties were determined using a Monsanto oscillating disc rheometer which was operated at a temperature of 150°C and at a frequency of 11 hertz. A description of oscillating disc rheometers can be found in the Vanderbilt Rubber Handbook edited by Robert O. Ohm (Norwalk, Conn., R. T. Vanderbilt Company, Inc., 1990), pages 554-557. The use of this cure meter and standardized values read from the curve are specified in ASTM D-2084. A typical cure curve obtained on an oscillating disc rheometer is shown on page 555 of the 1990 edition of the Vanderbilt Rubber Handbook.

In such an oscillating disc rheometer, compounded rubber samples are subjected to an oscillating shearing action of constant amplitude. The torque of the oscillating disc embedded in the stock that is being tested that is required to oscillate the rotor at the vulcanization temperature is measured. The values obtained using this cure test are very significant since changes in the rubber or the compounding recipe are very readily detected. It is obvious that it is normally advantageous to have a fast cure rate.

The invention may be better understood by reference to the following examples in which the parts and percentages are by weight unless otherwise indicated.

### Example 1

In this example, the benzamide of formula II (salicylamide) was evaluated in comparison with a commercially-available silica coupling agent, namely, bis-(3-triethoxysilylpropyl)tetrasulfide. The benzamide was obtained from Aldrich Chemical Company.

Rubber compositions containing the materials set out in Tables 1 and 2 were prepared in a BR Banbury™ mixer using three separate stages of addition (mixing), namely, two non-productive mix stages and one productive mix stage. The first non-productive stage was mixed for up to 4 minutes or to a rubber temperature of 160°C whichever occurred first. The second non-productive stage was mixed for 7 minutes at 160°C. The mixing time for the productive stage was to a rubber temperature of 120°C for 2 minutes.

The rubber compositions are identified herein as Samples 1-3. Samples 1 and 2 are considered herein as being controls without the use of the benzamide of formula II added during the nonproductive mixing stage.

The samples were cured at 150°C for 36 minutes.

Table 2 illustrates the behavior and physical properties of the cured samples 1-3.

It is clearly evident from the results that the use of benzamide of formula II results in increased state of cure (rheometer delta torque), 300 percent modulus, hardness, rebound and E' (stiffness) over the uncoupled control which shows improved reinforcement of the rubber leading to increased tire durability. The lowered tan delta at 60°C and the lowered DIN abrasion suggest reduced tire hysteresis and improved tread wear, respectively.

**Table 1**

| | Ex. 1 | Ex. 2 | Ex. 3 |
|---|---|---|---|
| First Non-productive | | | |
| Polyisoprene¹ | 100 | 100 | 100 |
| Carbon black | 35 | 35 | 35 |
| Processing oil | 5 | 5 | 5 |
| Zinc oxide | 5 | 5 | 5 |
| Fatty acid | 2 | 2 | 2 |
| Antioxidant² | 2 | 2 | 2 |

| Second Non-productive | | | |
|---|---|---|---|
| First non-productive | 149 | 149 | 149 |
| Silica³ | 15 | 15 | 15 |
| Silane coupling agent⁴ | 0 | 3 | 0 |
| Salicylamide⁵ | 0 | 0 | 2 |

| Productive | | | |
|---|---|---|---|
| Second non-productive | 164 | 167 | 167 |
| Sulfur | 1.4 | 1.4 | 1.4 |
| Accelerator⁶ | 1 | 1 | 1 |

| | | | |
|---|---|---|---|
| ¹ Synthetic cis 1,4-polyisoprene which is commercially available from The Goodyear Tire & Rubber Company under the designation Natsyn® 2200 | | | |
| ² Polymerized 1,2-dihydro 2,2,4-trimethylquinoline type | | | |
| ³ Precipitated silica which is commercially available from the PPG Company under the designation Hil Sil™ 210 | | | |
| ⁴ Obtained as bis-(3-triethoxysilylpropyl) tetrasulfide, which is commercially available as X50S from Degussa AG and is provided in a 50/50 by weight blend with carbon black. | | | |
| ⁵ Benzamide of formula II obtained from Aldrich Chemical Company | | | |
| ⁶ Sulfenamide type | | | |

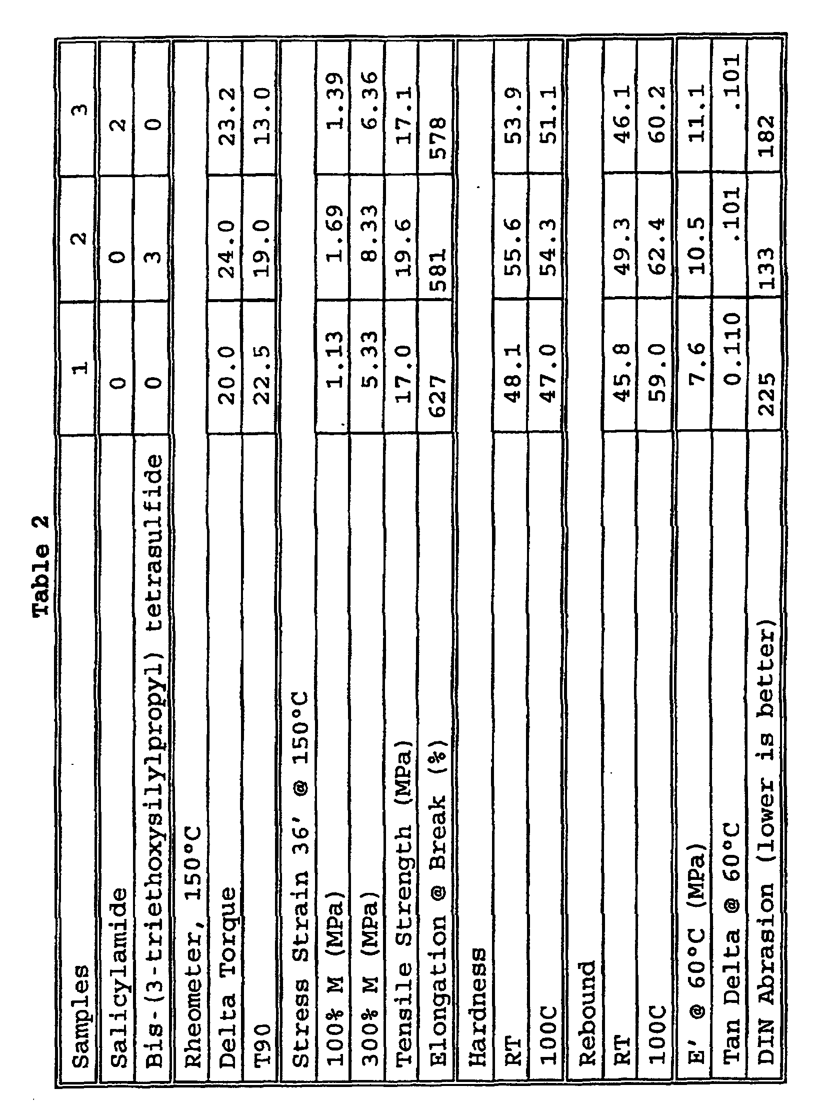

## Claims

1. A method of processing a rubber composition **characterized by** comprising mixing
(i) 100 parts by weight of at least one isolated and dried sulfur vulcanizable elastomer selected from conjugated diene homopolymers and copolymers and from copolymers of at least one conjugated diene and aromatic vinyl compound;
(ii) 0.05 to 10 phr of a benzamide of the formula: 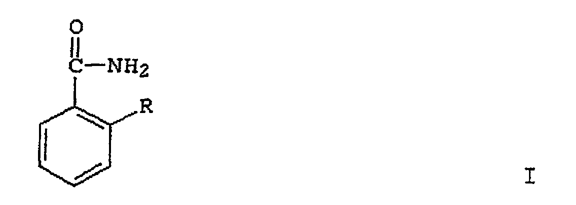 where R is a hydroxyl group; and
(iii)10 to 80 phr of a silica filler.

2. The method of claim 1 **characterized in that** said benzamide is added in an amount ranging from .10 to 5.0 phr.

3. The method of claim 1 **characterized in that** a sulfur containing organosilicon compound is present and is of the formula:
Z-Alk-Sₙ-Alk-Z
in which Z is selected from the group consisting of 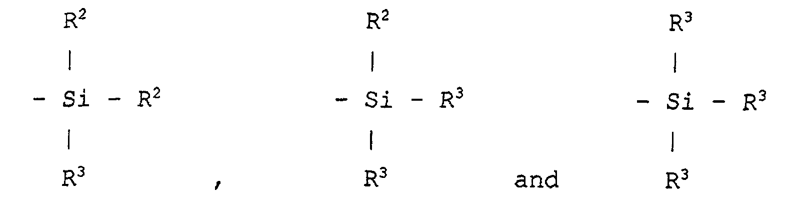 where R² is an alkyl group of 1 to 4 carbon atoms, cyclohexyl or phenyl; R³ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

4. The method of claim 3 **characterized in that** said sulfur containing organosilicon compound is present in an amount ranging from .01 to 1.0 parts by weight per part by weight of the silica.

5. The method of claim 1 **characterized in that** said isolated and dried sulfur vulcanizable elastomer is selected from the group consisting of natural rubber, neoprene, polyisoprene, butyl rubber, polybutadiene, styrene-butadiene copolymer, styrene/isoprene/butadiene rubber, methyl methacrylate-butadiene copolymer, isoprene-styrene copolymer, methyl methacrylate-isoprene copolymer, acrylonitrile-isoprene copolymer, acrylonitrile-butadiene copolymer, EPDM and mixtures thereof.

6. The method of claim 1 **characterized in that** said rubber composition is thermomechanically mixed at a rubber temperature in a range of from 140°C to 190°C for a mixing time of from 1 to 20 minutes.

7. A sulfur vulcanizable rubber **characterized by** comprising an intimate mixture of an isolated and dried elastomer containing olefinic unsaturation, .05 to 10 phr of a benzamide of the formula: 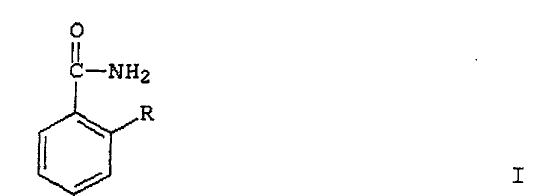 wherein R is a hydroxyl group; and 10 to 80 phr of a silica filler having a BET surface area in the range of 50 to 300 square meters per gram, a DBP absorption value in a range of 150 to 300 and an ultimate particle size in the range of 0.01 to 0.05 microns.

8. The composition of claim 7 **characterized in that** a sulfur containing organosilicon compound is present and is of the formula:
Z-Alk-Sₙ-Alk-Z
in which Z is selected from the group consisting of 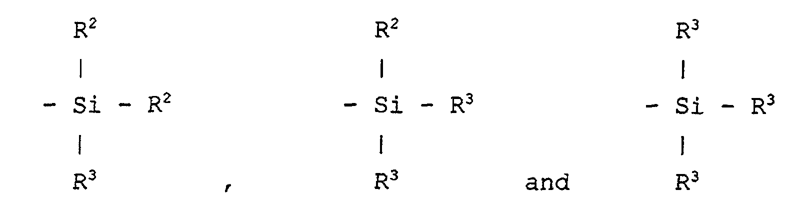 where R² is an alkyl group of 1 to 4 carbon atoms, cyclohexyl or phenyl; R³ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

9. The composition of claim 8 **characterized in that** said sulfur containing organosilicon compound is present in an amount ranging from .01 to 1.0 parts by weight per part by weight of said silica.

10. The composition of claim 7 **characterized in that** said isolated and dried elastomer is selected from the group consisting of natural rubber, neoprene, polyisoprene, butyl rubber, polybutadiene, styrene-butadiene copolymer, styrene/isoprene/butadiene rubber, methyl methacrylate-butadiene copolymer, isoprene-styrene copolymer, methyl methacrylate-isoprene copolymer, acrylonitrile-isoprene copolymer, acrylonitrile-butadiene copolymer, EPDM and mixtures thereof.

11. The composition of claim 7 **characterized in that** said composition is thermomechanically mixed at a rubber temperature in a range of from 140°C to 190°C for a total mixing time of from 1 to 20 minutes.

12. A sulfur vulcanized rubber composition which is **characterized by** being prepared by heating the composition of any of the preceding claims 7 through 11 to a temperature ranging from 100°C to 200°C in the presence of a sulfur vulcanizing agent.

13. A sulfur vulcanized rubber composition in the form of a tire, belt or hose **characterized by** being made from the composition of claim 12.

14. A tire having a tread **characterized by** the composition of claim 12.

## Patentansprüche

1. Verfahren zur Verarbeitung einer Kautschuk-Zusammensetzung, **dadurch gekennzeichnet, daß** es das Mischen von
(i) 100 Gew.-Teilen mindestens eines isolierten und getrockneten Schwefel-vulkanisierbaren Elastomers, das aus konjugierten. Dien-Homopolymeren und -Copolymeren und aus Copolymeren von mindestens einem konjugierten Dien und mindestens einer aromatischen Vinyl-Verbindung ausgewählt ist;
(ii) 0,05 bis 10 phr eines Benzamids der Formel: 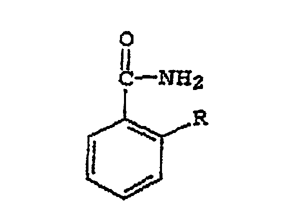 in der R eine Hydroxylgruppe ist; und
(iii) 10 bis 80 phr eines Kieselsäure-Füllstoffs umfaßt.

2. Verfahren nach Anspruch 1; **dadurch gekennzeichnet, daß** das Benzamid in einer Menge im Bereich von 0,10 bis 5,0 phr zugesetzt wird.

3. Verfahren nach Anspruch 1, **dadurch gekennzeichnet, daß** eine Schwefel-haltige Organosilicium-Verbindung anwesend ist und die Formel:
Z-Alk-Sₙ-Alk-Z
aufweist, in der Z ausgewählt ist aus der Gruppe bestehend aus 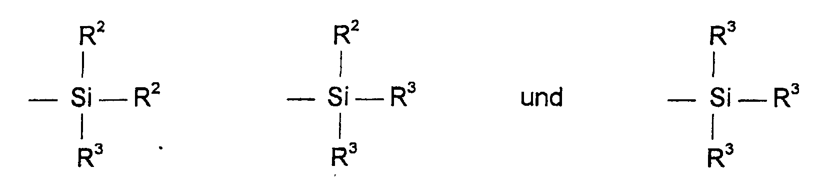 worin R² eine Alkylgruppe mit 1 bis 4 Kohlenstoffatomen, Cyclohexyl oder Phenyl ist; R³ Alkoxy mit 1 bis 8 Kohlenstoffatomen oder Cycloalkoxy mit 5 bis 8⁻Kohlenstoffatomen ist; Alk ein zweiwertiger Kohlenwasserstoff mit 1 bis 18 Kohlenstoffatomen ist und n eine ganze Zahl von 2 bis 8 ist.

4. Verfahren nach Anspruch 3, **dadurch gekennzeichnet, daß** die Schwefel-haltige Organosilicium-Verbindung in einer Menge im Bereich von 0,01 bis 1,0 Gew.-Teilen pro Gew.-Teil der Kieselsäure vorliegt.

5. Verfahren nach Anspruch 1, **dadurch gekennzeichnet, daß** das isolierte und getrocknete Schwefel-vulkanisierbare Elastomer ausgewählt ist aus der Gruppe bestehend aus Naturkautschuk, Neopren, Polyisopren, Butylkautschuk, Polybutadien, Styrol-Butadien-Copolymer, Styrol/lsopren/Butadien-Kautschuk, Methylmethacrylat-Butadien-Copolymer, Isopren-Styrol-Copolymer, Methylmethacrylat-lsopren-Copolymer, Acrylnitril-Isopren-Copolymer, Acrylnitril-Butadien-Copolymer, EPDM und deren Mischungen.

6. Verfahren nach Anspruch 1, **dadurch gekennzeichnet, daß** die Kautschuk-Zusammensetzung thermomechanisch bei einer Kautschuk-Temperatur im Bereich von 140°C bis 190°C über eine Mischungszeit von 1 bis 20 Minuten gemischt wird.

7. Schwefel-vulkanisierbarer Kautschuk, **dadurch gekennzeichnet, daß** er eine innige Mischung eines isolierten und getrockneten Elastomers, das olefinische Unsättigung enthält, 0,05 bis 10 phr eines Benzamids der Formel: 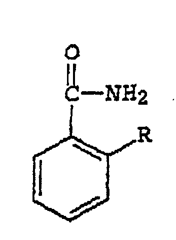 worin R eine Hydroxylgruppe ist; und 10 bis 80 phr eines Kieselsäure-Füllstoffs mit einer BET-Oberfläche im Bereich von 50 bis 300 m²/g, einem DBP-Absorptionswert im Bereich von 150 bis 300 und einer Grenz-Teilchengröße im Bereich von 0,01 bis 0,05 µm umfaßt.

8. Zusammensetzung nach Anspruch 7, **dadurch gekennzeichnet, daß** eine Schwefel-haltige Organosilicium-Verbindung vorliegt und die Formel:
Z-Alk-Sₙ-Alk-Z
aufweist, in der Z ausgewählt ist aus der Gruppe bestehend aus 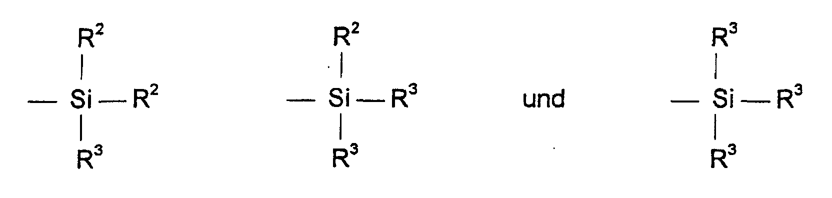 worin R² eine Alkylgruppe mit 1 bis 4 Kohlenstoffatomen, Cyclohexyl oder Phenyl ist; R³ Alkoxy mit 1 bis 8 Kohlenstoffatomen oder Cycloalkoxy mit 5 bis 8 Kohlenstoffatomen ist; Alk ein zweiwertiger Kohlenwasserstoff mit 1 bis 18 Kohlenstoffatomen ist und n eine ganze Zahl von 2 bis 8 ist.

9. Zusammensetzung nach Anspruch 8, **dadurch gekennzeichnet, daß** die Schwefel-haltige Organosilicium-Verbindung in einer Menge im Bereich von 0,01 bis 1,0 Gew.-Teilen pro Gew.-Teil der Kieselsäure vorliegt.

10. Zusammensetzung nach Anspruch 7, **dadurch gekennzeichnet, daß** das isolierte und getrocknete Elastomer ausgewählt ist aus der Gruppe bestehend aus Naturkautschuk, Neopren, Polyisopren, Butylkautschuk, Polybutadien, Styrol-Butadien-Copolymer, Styrol/Isopren/Butadien-Kautschuk, Methylmethacrylat-Butadien-Copolymer, Isopren-Styrol-Copolymer, Methylmethacrylat-lsopren-Copolymer, Acrylnitril-lsopren-Copolymer, Acrylnitril-Butadien-Copolymer, EPDM und deren Mischungen.

11. Zusammensetzung nach Anspruch 7, **dadurch gekennzeichnet, daß** die Zusammensetzung thermomechanisch bei einer Kautschuk-Temperatur im Bereich von 140°C bis 190°C über eine Gesamtmischungszeit von 1 bis 20 Minuten gemischt ist.

12. Schwefel-vulkanisierte Gummi-Zusammensetzung, die **dadurch gekennzeichnet ist, daß** sie durch Erwärmen der Zusammensetzung nach irgendeinem der vorangehenden Ansprüche 7 bis 11 auf eine Temperatur im Bereich von 100°C bis 200°C in Anwesenheit eines Schwefel-Vulkanisationsmittels hergestellt ist.

13. Schwefel-vulkanisierte Gummi-Zusammensetzung in Form eines Reifens, Gürtels oder Schlauchs, **dadurch gekennzeichnet, daß** sie aus der Zusammensetzung nach Anspruch 12 hergestellt ist.

14. Reifen mit einer Lauffläche, die durch die Zusammensetzung nach Anspruch 12 gekennzeichnet ist.

## Revendications

1. Procédé de traitement d'une composition de caoutchouc, **caractérisé par** le fait de mélanger
(i) à concurrence de 100 parties en poids, au moins un élastomère vulcanisable au soufre isolé et séché choisi parmi le groupe comprenant des homopolymères et des copolymères de diènes conjugués et des copolymères d'au moins un diène conjugué et d'un composé vinylaromatique, avec
(ii) à concurrence de 0,05 à 10 phr, un benzamide répondant à la formule: 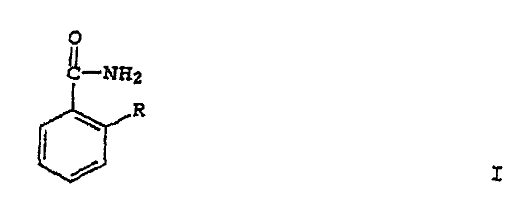 dans laquelle R représente un groupe hydroxyle; et
(iii) à concurrence de 10 à 80 phr, une matière de charge de silice.

2. Procédé selon la revendication 1, **caractérisé en ce que** ledit benzamide est ajouté en une quantité qui se situe dans le domaine de 0,10 à 5,0 phr.

3. Procédé selon la revendication 1, dans lequel un composé d'organosilicium est présent et répond à la formule:
Z-Alk-Sₙ-Alk-Z
dans laquelle Z est choisi parmi le groupe constitué par 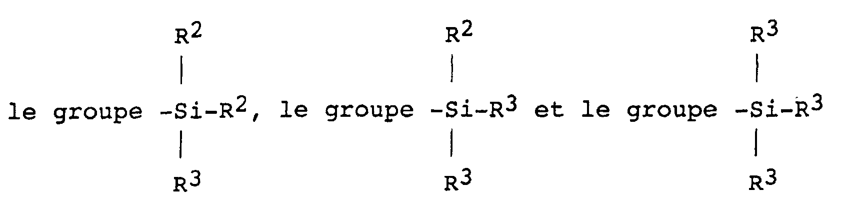 dans lesquels R² représente un groupe alkyle contenant de 1 à 4 atomes de carbone, un groupe cyclohexyle ou un groupe phényle; R³ représente un groupe alcoxy contenant de 1 à 8 atomes de carbone ou un groupe cycloalcoxy contenant de 5 à 8 atomes de carbone; Alk représente un groupe d'hydrocarbure divalent contenant de 1 à 18 atomes de carbone et n représente un entier de 2 à 8.

4. Procédé selon la revendication 3, **caractérisé en ce que** ledit composé d'organosilicium contenant du soufre est présent en une quantité se situant dans le domaine de 0,1 à 1,0 partie en poids par parties en poids de la silice.

5. Procédé selon la revendication 1, dans lequel ledit élastomère vulcanisable au soufre isolé et séché est choisi parmi le groupe constitué par le caoutchouc naturel, le néoprène, le polyisoprène, le caoutchouc butyle, le polybutadiène, un copolymère de styrène-butadiène, un caoutchouc de styrène-isoprène-butadiène, un copolymère de méthacrylate de méthyle-butadiène, un copolymère d'isoprène-styrène, un copolymère de méthacrylate de méthyle-isoprène, un copolymère d'acrylonitrile-isoprène, un copolymère d'acrylonitrile-butadiène, le caoutchouc EPDM et leurs mélanges.

6. Procédé selon la revendication 1, **caractérisé en ce qu'**on mélange ladite composition de caoutchouc dans des conditions thermomécaniques à une température du caoutchouc se situant dans le domaine de 140°C à 190°C pendant un temps de mélange de 1 à 20 minutes.

7. Caoutchouc vulcanisable au soufre **caractérisé par le fait qu'**il comprend un mélange intime d'un élastomère isolé et séché contenant une insaturation oléfinique, à concurrence de 0,05 à 10 phr, un benzamide répondant à la formule 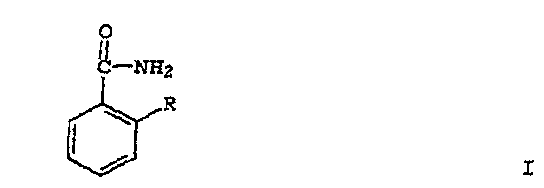 dans laquelle R représente un groupe hydroxyle; et, à concurrence de 10 à 80 phr, une matière de charge de silice qui possède une aire de surface BET de 50 à 300 mètres carrés par gramme, une valeur d'absorption du DBP dans le domaine de 150 à 300 et une granulométrie ultime dans le domaine de 0,01 à 0,05 micron.

8. Composition selon la revendication 7, **caractérisée en ce qu'**un composé d'organosilicium est présent et répond à la formule:
Z-Alk-Sₙ-Alk-Z
dans laquelle Z est choisi parmi le groupe constitué par 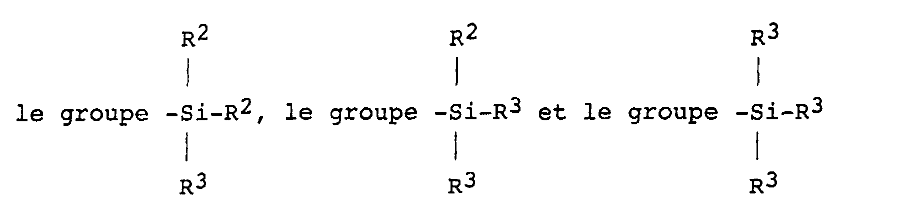 dans lesquels R² représente un groupe alkyle contenant de 1 à 4 atomes de carbone, un groupe cyclohexyle ou un groupe phényle; R³ représente un groupe alcoxy contenant de 1 à 8 atomes de carbone ou un groupe cycloalcoxy contenant de 5 à 8 atomes de carbone; Alk représente un groupe d'hydrocarbure divalent contenant de 1 à 18 atomes de carbone et n représente un entier de 2 à 8.

9. Composition selon la revendication 8, **caractérisée en ce que** ledit composé d'organosilicium contenant du soufre est présent en une quantité se situant dans le domaine de 0,1 à 1,0 partie en poids par parties en poids de la silice.

10. Composition selon la revendication 7, **caractérisée en ce que** ledit élastomère isolé et séché est choisi parmi le groupe constitué par le caoutchouc naturel, le néoprène, le polyisoprène, le caoutchouc butyle, le polybutadiène, un copolymère de styrène-butadiène, un caoutchouc de styrène-isoprène-butadiène, un copolymère de méthacrylate de méthyle-butadiène, un copolymère d'isoprène-styrène, un copolymère de méthacrylate de méthyle-isoprène, un copolymère d'acrylonitrile-isoprène, un copolymère d'acrylonitrile-butadiène, le caoutchouc EPDM et leurs mélanges.

11. Composition selon la revendication 7, **caractérisée en ce qu'**on mélange ladite composition de caoutchouc dans des conditions thermomécaniques à une température du caoutchouc se situant dans le domaine de 140°C à 190°C pendant un temps de mélange total de 1 à 20 minutes.

12. Composition de caoutchouc vulcanisé au soufre qui se **caractérise par** le fait de la préparer en chauffant la composition selon l'une quelconque des revendications précédentes 7 à 11, à une température qui se situe dans le domaine de 100°C à 200°C en présence d'un agent de vulcanisation au soufre.

13. Composition de caoutchouc vulcanisé au soufre sous la forme d'un bandage pneumatique, d'une courroie ou d'un tuyau flexible, **caractérisé par le fait qu'**on la prépare à partir de la composition selon la revendication 12.

14. Bandage pneumatique possédant une bande de roulement **caractérisée par** la composition selon la revendication 12.
